# NOUVEAU FASCICULE DE BREVET EUROPEEN

(11) **EP 3 041 971 B2**
(45) Date de publication et mention de la décision concernant l'opposition: **27.07.2022**
(45) Mention de la délivrance du brevet: 14.11.2018
(21) Numéro de dépôt: 14756019.7
(22) Date de dépôt: 19.08.2014
(51) Int. Cl.: C23C 4/08, C23C 4/18, C23C 28/00, F16L 58/08, F16L 58/10, C23F 13/14

(54) **REVETEMENT EXTERIEUR POUR ELEMENT DE TUYAUTERIE ENTERRE A BASE DE FER, ELEMENT DE TUYAUTERIE REVETU ET PROCEDE DE DEPOT DU REVETEMENT**
AUSSENBESCHICHTUNG FÜR VERGRABENE ROHRELEMENTE AUF EISENBASIS, BESCHICHTETES ROHRELEMENT UND VERFAHREN ZUR ABSCHEIDUNG DER BESCHICHTUNG
OUTER COATING FOR BURIED IRON-BASED PIPE ELEMENT, COATED PIPE ELEMENT, AND METHOD FOR DEPOSITING THE COATING

(30) Priorité: 02.09.2013 FR 1358364
(43) Date de publication de la demande: 13.07.2016
(73) Titulaire: Saint-Gobain Pam Canalisation, 54700 Pont-à-Mousson (FR)
(72) Inventeur: BONDIL, Olivier, F-54700 Pont-à-Mousson (FR); NOUAIL, Gérard, F-57000 Metz (FR); PEDEUTOUR, Jean-Marc, F-54700 Blenod Les Pont à Mousson (FR)
(74) Mandataire: Lavoix
(86) Numéro de dépôt international: PCT/EP2014/067693
(87) Numéro de publication internationale: WO 2015/028358

(56) Documents cités:
- EP-A1- 0 602 265
- EP-A1- 0 771 885
- WO-A1-94/19640
- WO-A1-94/19640
- WO-A1-95/04239
- WO-A1-2014/001544
- WO-A1-2014/001544
- WO-A1-2014/023646
- WO-A1-2014/023646
- CN-A- 1 514 031
- IN-A- 1152 KO2 008
- JP-A- 2003 328 106
- JP-A- 2004 223 429
- ZINC HANDBOOK, published in 1991, Chapter 9
- British Standard BS EN ISO 149192001
- "Effect of microstructure on the corrosion behavior of a zinc aluminium alloy", P. Choudhury et al
- "Aide Memoire Technique ED 955, Peinture en phase aqueuse (ou peinture a l'eau) - composition, risques toxicologies, mesures de prevention", INRS, 2006, pages FP-13,

## Description

La présente invention concerne un revêtement extérieur pour élément de tuyauterie enterré et à base de fer, notamment en fonte, le revêtement extérieur comprenant une première couche poreuse et une seconde couche poreuse disposée sur la première couche et apte à boucher des pores de la première couche.

L'invention concerne également un élément de tuyauterie revêtu de ce revêtement extérieur, ainsi qu'un procédé de dépôt du revêtement sur l'élément de tuyauterie.

Par "éléments de tuyauterie", on entend les tuyaux, ainsi que les divers accessoires tels que les coudes, les raccords, etc., utilisés par exemple dans le domaine de l'adduction d'eau.

Par le document JP-A-23010357, on connaît un procédé de fabrication de revêtement de tube d'acier. Ce document envisage un dépôt par pulvérisation d'un alliage zinc/ aluminium sacrificiel, suivi du dépôt d'une résine époxy. Il semble que la couche de résine doive être étanche. Ce procédé s'applique aux revêtements de tubes d'un "espace de séchage", et donc certainement de tubes aériens, constitués de fer ou d'acier.

La corrosion par les sols des métaux ferreux est un phénomène d'une nature qui diffère de la corrosion atmosphérique par les mécanismes mis en jeu et les facteurs qui la régissent, notamment la création de zones d'oxydation électriquement associées à des zones de réduction pouvant être situées à une certaine distance. Ceci engendre des détériorations localisées importantes du métal ferreux. Par ailleurs, certaines bactéries, en particulier sulfato-réductrices, présentes localement dans certains sols, peuvent intensifier ce processus électrochimique. On parle alors de « biocorrosion ».

La protection anticorrosion des éléments de tuyauterie enterrés présente ainsi une difficulté particulière, d'autant plus que les terrains sont hétérogènes et de natures très diverses, que les éléments de tuyauterie, suivant leur utilisation, véhiculent des fluides à des températures différentes, modifiant les conditions de corrosion, et que la manutention des éléments de tuyauteries destinées à être enterrées conduit fréquemment à blesser en divers emplacements leur surface extérieure.

Le document EP-A-0 686 246 décrit un élément de tuyauterie en fonte ductile comportant un revêtement comprenant une première couche métallisée poreuse et une seconde couche de peinture assurant un effet « bouche-pores ». Ce revêtement assure une protection efficace et durable de la tuyauterie contre la corrosion, une fois celle-ci enterrée.

Les documents WO 95/04239 et WO 95/19640 décrivent des éléments de tuyauterie revêtus de revêtements similaires.

Le document EP-A-0 771 885 décrit l'utilisation d'une peinture monocomposante à base d'au moins une résine organique pour boucher les pores d'un revêtement à base de zinc et d'aluminium déposé par pulvérisation thermique.

Un but de l'invention est de fournir un revêtement assurant une protection anticorrosion plus complète de l'élément de tuyauterie, en particulier en sol corrosif en présence de bactéries sulfato-réductrices, et présentant un coût compétitif.

A cet effet, l'invention a pour objet un revêtement extérieur selon la revendication 1.

Par l'expression « à base d'au moins une résine organique », on entend que la peinture comporte au moins une résine organique. Par exemple, la résine organique représente au moins 20%, de préférence au moins 25%, en masse de la peinture.

Selon des modes particuliers de réalisation, le revêtement extérieur comprend l'une ou plusieurs des caractéristiques suivantes, prise(s) isolément ou selon toutes les combinaisons techniquement possibles :
- la peinture est bicomposante avec solvant ;
- ledit solvant est organique ;
- ledit solvant est aqueux ;
- la peinture est bicomposante en phase aqueuse avec cosolvant organique ;
- la peinture est bicomposante et dépourvue de solvant ;
- la deuxième couche possède une épaisseur avantageusement comprise entre 60 µm et 150 µm à sec ; et
- les caractéristiques correspondant à l'une quelconque des revendications 2 à 6.

L'invention concerne aussi un élément de tuyauterie revêtu, à base de fer, notamment en fonte, destiné à être enterré, comprenant un revêtement extérieur tel que décrit ci-dessus.

L'invention concerne enfin un procédé de dépôt d'un revêtement extérieur tel que décrit ci-dessus sur un élément de tuyauterie à base de fer, notamment en fonte, destiné à être enterré, le procédé comprenant les étapes suivantes :
- a) dépôt par métallisation, de préférence à l'arc électrique, sur l'élément de tuyauterie, de la première couche, et
- b) dépôt sur la première couche, non recouverte d'efflorescences blanches, de la seconde couche.

Selon des modes particuliers de réalisation, le procédé comprend l'une ou plusieurs des caractéristiques suivantes, prise(s) isolément ou selon toutes les combinaisons techniquement possibles :
- les caractéristiques correspondant à l'une quelconque des revendications 9 et 10;
- à l'étape b), ladite surface est portée à la température comprise entre 35°C et 80°C par passage d'au moins une partie de l'élément de tuyauterie dans une étuve de préchauffage ;
- à l'étape a), la première couche est déposée par projection thermique, de préférence par arc électrique ;
- l'étape b) de dépôt de la seconde couche est réalisée par pistolet avec air comprimé ;
- l'étape b) de dépôt de la seconde couche est réalisée par pistolet sans air comprimé.

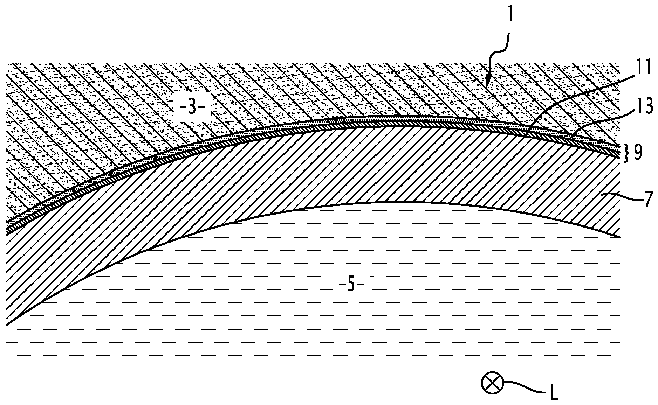

L'invention sera mieux comprise à la lecture de la description qui va suivre, donnée uniquement à titre d'exemple, et faite en se référant à la figure unique, qui est une vue schématique et partielle d'une section transversale d'un élément de tuyauterie selon l'invention.

Sur la figure est représenté un élément de tuyauterie revêtu 1 enterré dans un sol 3 et servant à transporter un fluide 5, par exemple de l'eau potable.

L'élément de tuyauterie revêtu 1 comprend un élément de tuyauterie 7 et un revêtement extérieur 9 situé entre le sol 3 et l'élément de tuyauterie 7, avantageusement réparti sur l'élément de tuyauterie 7 de manière à l'isoler du sol 3.

L'élément de tuyauterie 7 est à base de fer, avantageusement en fonte ductile. L'élément de tuyauterie 7 est par exemple un tuyau. Dans l'exemple représenté, il s'étend selon une direction longitudinale L perpendiculaire au plan de la figure. Seule une portion de la section de l'élément de tuyauterie 7 est représentée sur la figure, le reste de la section pouvant s'extrapoler sans difficulté à partir de la portion représentée.

Le fluide 5 circule à l'intérieur de l'élément de tuyauterie 7 selon la direction longitudinale L. Un revêtement intérieur, non représenté, peut exister sur une paroi interne de l'élément de tuyauterie 7, pour isoler le fluide 5 de l'élément de tuyauterie 7.

Le revêtement extérieur 9 comprend une première couche 11 et une seconde couche 13 disposée sur la première couche 11.

La première couche 11 est poreuse et avantageusement déposée par métallisation à l'arc électrique. La première couche 11 comprend un alliage ou pseudo-alliage de zinc.

La première couche 11 comprend également du cuivre, et/ou de l'argent, à des teneurs massiques comprises entre 0,1% et 5 %. Ces composants sont par exemple ajoutés sous forme élémentaire, ou sous forme d'oxydes.

L'alliage ou pseudo-alliage comprend, en proportion massique, au moins 50% de zinc, et entre 0,5% et 40% d'aluminium. Par exemple, la première couche 11 comprend 84% de zinc, 15% d'aluminium et 1% de cuivre en proportions massiques

Sous l'action des agents corrosifs du sol, la première couche 11 se transforme en une couche protectrice de produits de corrosion stable dans le milieu où elle a pris naissance. La première couche 11 est ainsi dite "anodique" par rapport à la fonte, en ce sens qu'elle se transforme progressivement par oxydation sous l'effet de la pile électrochimique formée par la fonte, l'alliage et le sol.

La formation de ladite couche protectrice permet de protéger la fonte sous-jacente, éventuellement mise à nu au niveau de blessures de la couche d'alliage. L'agent bactéricide de la première couche 11 inhibe l'action de bactéries présentes.

Du fait de son dépôt par métallisation à l'arc, la première couche 11 est constituée de gouttelettes solidifiées et est donc poreuse. Par une adaptation des réglages du procédé de métallisation gouvernant la taille des pores et de l'épaisseur de la couche, l'homme du métier est capable de régler les conditions, notamment la vitesse, de formation de la couche protectrice. Il a été constaté que la structure biphasique de l'alliage zinc/aluminium favorise le piégeage des produits de transformation du zinc.

La première couche 11 présente une densité surfacique d'au moins 200 g/m2, de préférence au moins 350 g/m2, par exemple environ 400 g/m2. Avantageusement, la première couche 11 est déposée par projection thermique, pour obtenir les densités surfaciques précitées.

La seconde couche 13 est une peinture à base d'une résine organique, par exemple une résine époxydique, bicomposante, dans un solvant organique. La seconde couche 13 est poreuse. La seconde couche 13 est apte à boucher des pores de la première couche 11 ainsi qu'à réguler la vitesse des réactions électrochimiques qui se produisent dans l'environnement de l'élément de tuyauterie.

La peinture est par exemple formulée à partir de composés appartenant aux listes positives de l'Union Européenne pour le contact avec les denrées alimentaires (règlement européen UE n° 10 / 2011) et disposant, à la date de dépôt de la présente demande de brevet, des agréments réglementaires (par exemple une Attestation de Conformité Sanitaire française (ACS), ou un certificat WRAS anglais) pour les produits placés au contact des eaux destinées à la consommation humaine.

La seconde couche 13 comprend avantageusement un ou plusieurs principes actifs aptes à entrer en contact avec des eaux destinées à la consommation humaine, par exemple des agents bactéricides. L'agent bactéricide est par exemple un sel de cuivre apte à restreindre l'activité des bactéries du sol 3. Les principes actifs bactéricides sont avantageusement à migration très lente (eau, sol) une fois la peinture sèche. Les particules solides des agents bactéricides sont alors encapsulées par la résine : la diffusion de l'eau du milieu extérieur au travers de la résine conduit à l'ionisation de ces agents qui ultérieurement, par diffusion lente, seront relâchés dans le milieu extérieur.

On va maintenant décrire un procédé pour déposer le revêtement extérieur 9 sur l'élément de tuyauterie 7. Le procédé comprend une étape a) de dépôt sur l'élément de tuyauterie 7 de la première couche 11 telle que décrite ci-dessus, et une étape b) de dépôt sur la première couche 11 d'une seconde couche 13 telle que décrite ci-dessus.

A l'étape a), la première couche 11 est avantageusement déposée par projection thermique, de préférence par arc électrique.

On dépose une quantité de matière suffisante pour obtenir une densité surfacique de la première couche 11 d'au moins 200 g/m2, de préférence d'au moins 350 g/m2. La projection se fait par exemple à partir de fils massifs ou de fils fourrés selon la disponibilité du zinc allié.

A l'étape b), la seconde couche 13 est avantageusement déposée sur la première couche 11 alors que cette dernière n'est pas recouverte d'efflorescences blanches, c'est-à-dire avec un différé de temps réduit entre le dépôt de la seconde couche 13 et de la première couche 11.

A l'étape b), la seconde couche 13 est déposée avantageusement par pistolet sans air comprimé, en particulier pour les grandes surfaces, et/ou à la brosse, en particulier pour les petites surfaces ou les retouches, de telle manière que la seconde couche 13 ait une épaisseur avantageusement comprise entre 60 µm et 150 µm à sec, par exemple une épaisseur d'environ 120 µm à sec.

Le dépôt de la seconde couche 13 est avantageusement au moins en partie réalisé par pistolet sans air comprimé, l'application réalisée au pistolet se faisant sur une surface ayant une température comprise entre 35°C et 80°C. Cette surface est portée à ladite température par exemple par passage des éléments de tuyauterie dans une étuve de préchauffage

### Exemples de revêtements :

Revêtement extérieur 9 selon l'invention sur tuyau 7 en fonte ductile, composé d'une première couche 11 métallisée déposée par arc électrique, de 400 g/m2 d'alliage zinc-aluminium-cuivre à 15% d'aluminium et 1 % de cuivre en masse, et d'une seconde couche 13 constituée d'une peinture à base d'une résine époxydique, bicomposante, dans un solvant organique, la seconde couche 13 ayant une épaisseur de 120 µm à sec.

La peinture a été appliquée après préchauffage du tuyau 7 revêtu de la première couche 11 dans une étuve à 80°C.

La peinture à base de résine époxydique comporte avantageusement un agent bactéricide, par exemple un sel de cuivre, en vue de restreindre l'activité des bactéries du sol 3 au niveau du revêtement extérieur 9.

Selon un deuxième exemple selon l'invention, la première couche 11 comporte un agent bactéricide, du cuivre entre 0,1% et 5% en masse, en vue de restreindre l'activité des bactéries du sol 3 au niveau du revêtement extérieur 9. La seconde couche 13 est dans cet exemple dépourvue d'agent bactéricide.

Selon un troisième exemple non conforme à l'invention, la première couche 11 est dépourvue d'agent bactéricide et la seconde couche 13 comporte un agent bactéricide, par exemple un sel de cuivre, en vue de restreindre l'activité des bactéries du sol 3 au niveau du revêtement extérieur 9.

Grâce aux caractéristiques de la première couche 11 et de la seconde couche 13 décrites ci-dessus, le revêtement extérieur 9 assure une protection anticorrosion encore plus efficace de l'élément de tuyauterie 7, en particulier en sol 3 corrosif présentant une forte activité bactérienne. En effet, la seconde couche 13 bouche très efficacement les pores de la première couche 11 tout en permettant de réguler la vitesse de consommation de l'alliage sacrificiel. En outre, le revêtement extérieur 9, de par sa constitution et son procédé d'application, est d'un coût très compétitif.

De plus, les opérations de revêtement de l'élément de tuyauterie 7 sont facilitées car il est possible de déposer le même revêtement 9 sur des zones destinées à être uniquement en contact avec le sol 3 corrosif et sur des zones pouvant se trouver au contact de l'eau 5 destinée à la consommation humaine.

## Revendications

1. Revêtement extérieur (9) pour élément de tuyauterie (7) enterré et à base de fer, notamment en fonte, le revêtement extérieur (9) étant constitué d'une première couche (11) poreuse et d'une seconde couche (13) poreuse disposée sur la première couche (11) et apte à boucher des pores de la première couche (11), le revêtement extérieur (9) étant **caractérisé en ce que** :
- la première couche (11) comprend un alliage ou pseudo-alliage de zinc, l'alliage ou pseudo-alliage comprenant, en proportion massique, au moins 50% de zinc, et de préférence entre 0,5% et 40% d'aluminium,-et
- la seconde couche (13) comprend une peinture à base d'au moins une résine organique, la peinture étant soit monocomposante dans un solvant ou cosolvant organique, soit bicomposante, et
- l'une au moins de la première couche (11) et de la seconde couche (13) comprend un agent bactéricide, et
- la première couche (11) comprend au moins un agent bactéricide pris dans la liste consistant en le cuivre, l'argent, et un mélange de cuivre et d'argent, ledit cuivre, ledit argent, et ledit mélange de cuivre et d'argent étant respectivement à des concentrations massiques comprises entre 0,1% et 5%.

2. Revêtement extérieur (9) selon la revendication 1, dans lequel la seconde couche (13) comprend au moins un agent bactéricide apte à entrer en contact avec des eaux destinées à la consommation humaine, notamment du cuivre, de l'argent, ou leurs sels, ledit cuivre, ledit argent et lesdits sels étant, de préférence, respectivement à des concentrations massiques comprises entre 0,1% et 5%.

3. Revêtement extérieur (9) selon l'une quelconque des revendications 1 ou 2, dans lequel la première couche (11) présente une densité surfacique d'au moins 200 g/m², de préférence au moins 350 g/m².

4. Revêtement extérieur (9) selon l'une quelconque des revendications 1 à 3, dans lequel la résine organique de la seconde couche est prise parmi les résines de nature acrylique, époxydique, polyuréthane, bitumineuse, vinylique, et leurs mélanges.

5. Revêtement extérieur (9) selon l'une quelconque des revendications 1 à 4, dans lequel la peinture contient un solvant pris parmi les solvants organiques, l'eau, et leurs mélanges, le solvant représentant entre 20% et 60 %, de préférence entre 30% et 50%, en masse de la peinture, et la résine organique représentant entre 20% et 70 %, de préférence entre 25% et 45%, en masse de la peinture.

6. Elément de tuyauterie revêtu (1), à base de fer, notamment en fonte, destiné à être enterré, et **caractérisé en ce qu'**il comprend un revêtement extérieur (9) selon l'une quelconque des revendications précédentes.

7. Procédé de dépôt d'un revêtement extérieur (9) selon l'une quelconque des revendications 1 à 5 sur un élément de tuyauterie (7) à base de fer, notamment en fonte, destiné à être enterré, le procédé étant **caractérisé en ce qu'**il comprend les étapes suivantes :
a) dépôt par métallisation, de préférence à l'arc électrique, sur l'élément de tuyauterie, de la première couche (11), et
b) dépôt sur la première couche (11), non recouverte d'efflorescences blanches, de la seconde couche (13).

8. Procédé selon la revendication 7, dans lequel l'étape b) de dépôt de la seconde couche (13) est réalisée par pistolet, et/ou à la brosse ou au rouleau, de manière à ce que la seconde couche (13) ait une épaisseur comprise entre 60 µm et 150 µm à sec.

9. Procédé selon la revendication 7 ou 8, dans lequel l'étape b) de dépôt de la seconde couche (13) est au moins en partie réalisée par pistolet sans air comprimé, l'application réalisée au pistolet se faisant sur une surface ayant une température comprise entre 35°C et 80°C.

## Patentansprüche

1. Außen-Beschichtung (9) für ein Rohrleitung-Element (7), das eingegraben ist und das auf der Basis von Eisen, insbesondere Gusseisen, ist, wobei die Außen-Beschichtung (9) gebildet ist aus einer ersten porösen Schicht (11) und einer zweiten porösen Schicht (13), die auf der ersten Schicht (11) angeordnet ist und imstande ist, die Poren der ersten Schicht (11) zu blockieren, wobei die Außen-Beschichtung (9) **dadurch gekennzeichnet ist, dass**:
- die erste Schicht (11) aufweist eine Legierung oder Pseudo-Legierung von Zink, wobei die Legierung oder Pseudo-Legierung aufweist, im Massenverhältnis, wenigstens 50% Zink und bevorzugt zwischen 0,5% und 40% Aluminium,
- die zweite Schicht (13) aufweist einen Anstrich auf der Basis von wenigstens einem organischen Harz, wobei der Anstrich entweder einkomponentig in einem organischen Lösungsmittel oder Ko-Lösungsmittel, oder zweikomponentig ist,
- wenigstens eine von der ersten Schicht (11) und der zweiten Schicht (13) ein bakterizides Mittel aufweist, und
- die erste Schicht (11) aufweist wenigstens ein bakterizides Mittel, das aus der Liste entnommen ist, die besteht aus Kupfer, Silber und einer Mischung aus Kupfer und Silber, wobei das besagte Kupfer, das besagte Silber und die besagte Mischung aus Kupfer und Silber respektive von Massenkonzentrationen sind, die zwischen 0,1% und 5%, bevorzugt zwischen 0,5% und 3%, liegen.

2. Außen-Beschichtung (9) gemäß Anspruch 1, wobei die zweite Schicht (13) aufweist wenigstens ein bakterizides Mittel, das imstande ist, in Kontakt zu treten mit Trinkwässern, insbesondere aus Kupfer, aus Silber oder deren Salzen, wobei das besagte Kupfer, das besagte Silber und die besagten Salze bevorzugt respektive von Massenkonzentrationen sind, die zwischen 0,1% und 5% liegen.

3. Außen-Beschichtung (9) gemäß irgendeinem der Ansprüche 1 oder 2, wobei die erste Schicht (11) eine Oberflächen-Dichte von wenigstens 200 g/m², bevorzugt von wenigstens 350 g/m² hat.

4. Außen-Beschichtung (9) gemäß irgendeinem der Ansprüche 1 bis 3, wobei das organische Harz der zweiten Schicht genommen ist aus Harzen des Typs Acryl, Epoxid, Polyurethan, Bitumen, Vinyl und deren Mischungen.

5. Außen-Beschichtung (9) gemäß irgendeinem der Ansprüche 1 bis 4, wobei der Anstrich ein Lösungsmittel enthält, das genommen ist aus organischen Lösungen, Wasser und deren Mischungen, wobei das Lösungsmittel zwischen 20% und 60%, bevorzugt zwischen 30% und 50%, der Masse des Anstrichs repräsentiert und wobei das organische Harz zwischen 20% und 70%, bevorzugt zwischen 25% und 45%, der Masse des Anstrichs repräsentiert.

6. Beschichtetes-Rohrleitung-Element (1), das auf der Basis von Eisen, insbesondere Gusseisen, ist, das dazu bestimmt ist, eingegraben zu sein, und das **dadurch gekennzeichnet ist, dass** eine Außen-Beschichtung (9) gemäß irgendeinem der vorhergehenden Ansprüche aufweist.

7. Verfahren zur Aufbringung einer Außen-Beschichtung (9) gemäß irgendeinem der Ansprüche 1 bis 5 auf einem Rohrleitung-Element (7), das auf der Basis von Eisen, insbesondere Gusseisen, ist und das dazu bestimmt ist, eingegraben zu sein, wobei das Verfahren **dadurch gekennzeichnet ist, dass** es aufweist die folgenden Schritte:
a) Aufbringung via Metallisierung, bevorzugt durch Lichtbogen, der ersten Schicht (11) auf dem Rohrleitung-Element, und
b) Aufbringung der zweiten Schicht (13) auf der ersten Schicht (11), welche nicht von Weißausblühungen bedeckt ist.

8. Verfahren gemäß Anspruch 7, wobei der Schritt b) der Aufbringung der zweiten Schicht (13) realisiert wird via Spritzpistole und/oder Pinsel oder Rolle, sodass die zweite Schicht (13) eine Trocken-Dicke hat, die zwischen 60µm und 150µm liegt.

9. Verfahren gemäß Anspruch 7 oder 8, wobei der Schritt b) der Aufbringung der zweiten Schicht (13) zumindest teilweise realisiert wird via Spritzpistole ohne Druckluft, wobei die Aufbringung, die via Spritzpistole realisiert wird, auf einer Oberfläche durchgeführt wird, die eine Temperatur hat, die zwischen 35°C und 80°C liegt.

## Claims

1. An outer coating (9) for an underground piping member (7) made from iron, in particular cast iron, the outer coating (9) being made of a first porous layer (11) and of a second porous layer (13) positioned on the first layer (11) and capable of plugging the pores of the first layer (11), the outer coating (9) being **characterized in that**:
- the first layer (11) comprises an alloy or pseudo-alloy of zinc, the alloy or pseudo-alloy comprising at least 50 wt% zinc, and preferably between 0.5 wt% and 40 wt% aluminum,
- the second layer (13) comprises a paint with a base of at least one organic resin, the paint being either single-component in an organic solvent or co-solvent, or dual-component,
- at least one among the first layer (11) and second layer (13) comprises a bactericidal agent, and
- the first layer (11) comprises at least one bactericidal agent taken from the list consisting of copper, silver, and a mixture of copper and silver, said copper, said silver, and said mixture of copper and silver respectively being at concentrations comprised between 0.1 wt% and 5 wt%, preferably between 0.5 wt% and 3 wt%.

2. The outer coating (9) according to claim 1, wherein the second layer (13) comprises at least one bactericidal agent capable of coming into contact with water intended for human consumption, in particular copper, silver, or salts thereof, said copper, silver and salts thereof preferably respectively being at concentrations comprised between 0.1 wt% and 5 wt%.

3. The outer coating (9) according to any one of claims 1 or 2, wherein the first layer (11) has a surface density of at least 200 g/m², preferably at least 350 g/m².

4. The outer coating (9) according to any one of claims 1 to 3, wherein the organic resin of the second layer is chosen from among acrylic, epoxide, polyurethane, bituminous, vinyl resins and mixtures thereof.

5. The outer coating (9) according to any one of claims 1 to 4, wherein the paint contains a solvent chosen from among organic solvents, water, and mixtures thereof, the solvent representing between 20 wt% and 60 wt%, preferably between 30 wt% and 50 wt%, of the paint, and the organic resin representing between 20 wt% and 70 wt%, preferably between 25 wt% and 45 wt%, of the paint.

6. A coated piping member (1) made from iron, in particular cast iron, designed to be buried, comprising an outer coating (9) according to any one of the preceding claims.

7. A method for depositing an outer coating (9) according to any one of claims 1 to 5 on a piping member (7) made from iron, in particular cast iron, designed to be buried, the method being **characterized in that** it comprises the following steps:
a) deposition of the first layer (11) on the piping by metallization, preferably electric arc metallization, and
b) deposition on the first layer (11), not covered with white efflorescences, of the second layer (13).

8. The method according to claim 7, wherein step b) for depositing the second layer (13) is done by gun, and/or using a brush or roller, such that the second layer (13) has a thickness comprised between 60 µm and 150 µm when dry.

9. The method according to claim 7 or 10, wherein step b) for depositing the second layer (13) is at least partially done by gun with no compressed air, the application done by gun being performed on a surface having a temperature comprised between 35°C and 80°C.
